# EUROPEAN PATENT APPLICATION

(11) **EP 4 797 760 A1**
(43) Date of publication of application: **26.08.2026**
(21) Application number: 24896170.8
(22) Date of filing: 31.10.2024
(51) Int. Cl.: H04W 12/67

(54) **MODEL MANAGEMENT METHOD AND APPARATUS**

(30) Priority: 30.11.2023 CN 202311636277
(71) Applicant: HUAWEI TECHNOLOGIES CO., LTD., Shenzhen 518129 (CN)
(72) Inventor: LIU, Zonghui, Shenzhen, Guangdong 518129 (CN); LIU, Yinping, Shenzhen, Guangdong 518129 (CN)
(74) Representative: Gill Jennings & Every LLP
(86) International application number: PCT/CN2024/129151
(87) International publication number: WO 2025/113079

(57) **Abstract**

This application provides a model management method and an apparatus, and relates to the field of communication technologies, to reduce a data security risk of an AI model in the wireless field. The method includes: obtaining a first communication data set used for updating a first machine learning model, and sending a second communication data set to a model training function entity. The first processing policy includes a first loss threshold, and the first machine learning model is used for managing a wireless communication service. The second communication data set is obtained by performing a processing operation on suspicious data in the first communication data set according to the first processing policy, and the suspicious data is wireless communication data whose loss value is greater than the first loss threshold.

## Description

This application claims priority to Chinese Patent Application No. 202311636277.9, filed with the China National Intellectual Property Administration on November 30, 2023 and entitled "MODEL MANAGEMENT METHOD AND APPARATUS", which is incorporated herein by reference in its entirety.

### TECHNICAL FIELD

This application relates to the communication field, and in particular, to a model management method and apparatus.

### BACKGROUND

To improve network intelligence and automation, artificial intelligence (artificial intelligence, AI) and machine learning (machine learning, ML) technologies are increasingly applied to the wireless field. Research is being conducted across a plurality of fields, including the management domain, the core network (core network, CN) domain, and the radio access network (radio access network, RAN) domain, on how to use the AI/ML technologies to enable network intelligence.

However, AI models in the wireless field face security threats, mainly including but not limited to poisoning attacks, in each phase of the lifecycle of the AI models. Therefore, reducing data security risks of an AI model in the wireless field becomes a hot topic in current research.

### SUMMARY

Embodiments of this application provide a model management method and an apparatus, to reduce a data security risk of an AI model in the wireless field.

To achieve the foregoing objective, this application uses the following technical solutions.

According to a first aspect, a model management method is provided, applied to a model inference function entity. The method includes: obtaining a first communication data set used for updating a first machine learning model, and sending a second communication data set to a model training function entity. The first processing policy includes a first loss threshold, and the first machine learning model is used for managing a wireless communication service. The second communication data set is obtained by performing a processing operation on suspicious data in the first communication data set according to the first processing policy, and the suspicious data is wireless communication data whose loss value is greater than the first loss threshold.

The first machine learning model may be a model for AI-based beam management or a model for beam selection, or may be a model, such as a downlink/uplink data volume prediction model, a channel fading change prediction model, a CSI feedback model, or an AI-assisted positioning model, in another management scenario in wireless communication. This is not specifically limited herein.

The first communication data set may include wireless communication data between the access network device and a plurality of terminals, and may specifically include data such as reference signal received power (RSRP), a channel state information matrix, and a channel impulse response, which are used to ensure a service in a wireless communication process. In addition, the first communication data set may further include a label. The label may be used for marking a true value of the wireless communication data in a corresponding scenario, and may be selected based on an actual situation. RSRP in an AI-based beam management scenario is used as an example. The wireless communication data may include the RSRP and an identifier of a beam corresponding to the RSRP. A label may be used for marking whether the beam indicated by the identifier of the beam is an optimal beam corresponding to the RSRP. For example, the label includes two values: 0 and 1, where 1 indicates that the beam indicated by the identifier of the beam is the optimal beam corresponding to the RSRP, and 0 indicates that the beam indicated by the identifier of the beam is not the optimal beam corresponding to the RSRP.

It can be learned from the method according to the first aspect that, a main objective of a poisoning attack is to affect a training effect in a model retraining update process and reduce training precision of the model, that is, a loss value of an updated model on poisoning data is large. Based on this, the model inference function entity may determine data whose loss value is greater than the first loss threshold in the first communication data set as suspicious data, or data suspected of being a poisoning attack, and process the data, to avoid an adverse impact on training of the first machine learning model, and reduce a data security risk of an AI model in the wireless field.

In a possible design solution, the processing operation includes a marking operation, and the marking operation is adding an easily identifiable marker to the suspicious data, to subsequently identify which data is the suspicious data, prevent the suspicious data from affecting retraining of the first machine learning model, and ensure an effect of model retraining.

Optionally, before performing the marking operation, the method according to the first aspect further includes: determining that a proportion of the suspicious data in the first communication data set is greater than a first proportion threshold.

In a possible design solution, the processing operation includes a removing operation, and the removing operation is removing the suspicious data from the first communication data set, to avoid subsequently retraining the first machine learning model by using the suspicious data, and ensure an effect of model retraining.

Optionally, before performing the removing operation, the method further includes: determining that a proportion of the suspicious data in the first communication data set is less than or equal to a first proportion threshold.

It may be understood that the first proportion threshold may represent an upper limit of a proportion of suspicious data allowed in the communication data set for normal training of the model. In other words, if the proportion of the suspicious data in the communication data set is less than or equal to the first proportion threshold, it indicates that there is a small amount of the suspicious data. Even if the suspicious data is removed, a quantity of samples of remaining normal data in the communication data set can still complete normal training of the machine learning model. Therefore, the model inference function entity may perform the removing operation. On the contrary, if the proportion of the suspicious data in the communication data set is greater than the first proportion threshold, it indicates that there is an excessively large proportion of the suspicious data. If the suspicious data is directly removed, the quantity of samples of the normal data may not support the normal training of the machine learning model. Therefore, the model inference function entity may perform the marking operation, so that the model training function entity determines whether to use or remove the suspicious data.

Optionally, the first processing policy may include the first proportion threshold. In other words, the first proportion threshold may be dynamically configured along with the first processing policy, so that the first proportion threshold can be dynamically adjusted based on an actual requirement. Alternatively, the first proportion threshold may be preconfigured locally on the model inference function entity, to avoid overheads caused by configuration.

In a possible design solution, the first processing policy may indicate the processing operation.

In a possible design solution, the method according to the first aspect further includes: receiving the first processing policy from a model management function entity. In other words, the first processing policy may also be dynamically configured by a network element/entity in a management domain, so that the first processing policy can be dynamically adjusted based on an actual requirement. Alternatively, the first processing policy may be preconfigured locally on the model inference function entity, to avoid overheads caused by configuration.

In a possible design solution, obtaining the first communication data set used for updating the first machine learning model includes: receiving first indication information from the model training function entity, and receiving wireless communication data from the plurality of terminals based on the first indication information. The first indication information indicates that the first machine learning model needs to be updated, to implement on-demand obtaining and avoid redundancy.

Optionally, the model inference function entity is deployed in an access network device. For example, the model inference function entity is deployed in an open central unit O-CU or an open distributed unit O-DU of the access network device, or may be deployed in a network element/device in any another possible device form. This is not limited herein.

In a possible design solution, the method according to the first aspect may further include: processing the first communication data set by using the first machine learning model, to determine the suspicious data in the first communication data set. In other words, the model inference function entity may perform inference calculation on the first communication data set by using the first machine learning model, to determine the suspicious data in the first communication data set.

In a possible design solution, after the sending the second communication data set to the model training function entity, the method according to the first aspect may further include: receiving second indication information from the model training function entity, and obtaining the second machine learning model based on the second indication information. The second indication information indicates the second machine learning model, and the second machine learning model is obtained by updating the first machine learning model. In this way, the machine learning model is updated, and an impact on an actual service caused by reduced precision of the model is avoided.

According to a second aspect, a model management method is provided, applied to a model training function entity, and including: obtaining a second communication data set used for updating a first machine learning model, and updating the first machine learning model based on a third communication data set. The first machine learning model is used for managing a wireless communication service. The third communication data set is obtained by performing a removing operation on error data in the second communication data set according to a second processing policy, the second processing policy includes a third loss threshold, and if the first machine learning model is updated by using the error data, a loss value for processing wireless communication data by using the updated machine learning model is greater than the third loss threshold.

It can be learned from the method according to the second aspect that, because a main objective of a poisoning attack is to affect a training effect in a model retraining update process and reduce training precision of the model, consequently, a loss value of the updated model on poisoning data is large. Based on this, the model training function entity may also determine, in a manner similar to that of the foregoing model inference function entity, data whose loss value is greater than the first loss threshold in the first communication data set as error data, for example, poisoning attack data, and remove the error data, to avoid an adverse impact on training of the first machine learning model, and reduce a data security risk of an AI model in the wireless field.

In a possible design solution, the removing operation is removing the error data from the second communication data set.

Optionally, the removing operation is specifically removing the error data in marked suspicious data from the second communication data set, and the marked suspicious data (or suspicious data) is wireless communication data whose loss value is greater than a loss threshold in the second communication data set. It may be understood that, because computing power of the model training function entity is stronger than that of the model inference function entity, when the model inference function entity cannot distinguish which data in the suspicious data is normal data and which data is poisoning attack data, the model training function entity may remove, by using a more refined removing operation, data that is actually poisoning attack data from the suspicious data, and use the normal data in the suspicious data for model training, to improve utilization of training data.

Optionally, the method according to the second aspect further includes: dividing the marked suspicious data into M data subsets, where M is an integer greater than 1; updating the first machine learning model by using an i^{th} data subset in the M data subsets, to obtain an i^{th} updated machine learning model, where i traverses 1 to M; processing test data by using the i^{th} updated machine learning model, to obtain an i^{th} test result; and if a loss value of test data in the i^{th} test result is greater than the third loss threshold, determining that the i^{th} data subset is error data; otherwise, determining that the i^{th} data subset is not the error data. It can be learned that, the suspicious data is divided into a plurality of data subsets, so that error data can be removed at a granularity of a data subset. Compared with removing all suspicious data, this method offers a more refined granularity, and allows normal data to be retained.

Optionally, the second processing policy may indicate the removing operation.

Optionally, the method according to the second aspect further includes: receiving the second processing policy from a model management function entity. In other words, the second processing policy may also be dynamically configured by a network element/entity in a management domain, so that the second processing policy can be dynamically adjusted based on an actual requirement. Alternatively, the second processing policy may be preconfigured locally on the model training function entity, to avoid overheads caused by configuration.

Optionally, before the obtaining the second communication data set used for updating the first machine learning model, the method according to the second aspect may further include: sending first indication information to a model inference function entity. The obtaining the second communication data set used for updating the first machine learning model includes: receiving the second communication data set from the model inference function entity, where the first indication information indicates that the first machine learning model needs to be updated, to implement on-demand obtaining and avoid redundancy.

Further, sending the first indication information to the model inference function entity includes: sending the first indication information to the model inference function entity based on a first condition. The first condition includes at least one of the following: a next update periodicity of a machine learning model is currently entered, to implement periodic dynamic update, prediction accuracy of the machine learning model is lower than an accuracy threshold, in this way, the model needs to be updated to improve precision of the model, or a proportion of suspicious data in wireless communication data that is obtained last time and that is used for updating the machine learning model is greater than a second proportion threshold, and current remaining duration until ending of machine learning model update is greater than threshold duration. The threshold duration may be a sum of duration needed for obtaining the wireless communication data used for updating the machine learning model and duration needed for updating the machine learning model. In this way, a model update effect this time may be ensured by re-obtaining data.

Further, the method according to the second aspect may further include: sending a second loss threshold to the model inference function entity, where the second loss threshold may be less than a loss threshold, for example, the first loss threshold, preconfigured by the model inference function entity, to lower a threshold for defining suspicious data by the model inference function entity, and ensure that more normal data can be provided for training through re-collection.

Further, the second processing policy further indicates the first condition.

Further, before updating the first machine learning model based on the third communication data set, the method according to the second aspect may further include: determining, based on a second condition, to update the first machine learning model, where the second condition is that a proportion of suspicious data in a communication data set is less than or equal to the second proportion threshold. In other words, the second proportion threshold may represent an upper limit of a proportion of data suspected of being a poisoning attack allowed in the communication data set for normal training. In practice, if the proportion of the suspicious data in the second communication data set is less than or equal to the second proportion threshold, it indicates that there is a small amount of the suspicious data. Even if the suspicious data is removed, remaining data in the second communication data set can still complete normal training of the first machine learning model. Therefore, the model inference function entity may perform the removing operation.

Further, the second processing policy further indicates the second condition.

Optionally, the second processing policy includes the second proportion threshold.

In a possible design solution, after the updating the first machine learning model based on the third communication data set, the method according to the second aspect may further include: sending second indication information to the model inference function entity, where the second indication information indicates a second machine learning model, and the second machine learning model is obtained by updating the first machine learning model.

In a possible design solution, the model training function entity is deployed in an access network device, and the second communication data set includes wireless communication data between the access network device and a plurality of terminals.

It may be understood that, for a technical effect of the method in the second aspect, refer to related descriptions in the method according to the first aspect. Details are not described herein again.

According to a third aspect, a model management method is provided, applied to a model management function entity, and including: obtaining a first processing policy of a first machine learning model, and sending the first processing policy to a model inference function entity. The first machine learning model is used for managing a wireless communication service, the first machine learning model is deployed in the model inference function entity, the first processing policy includes a first loss threshold, the first processing policy is capable of being used to perform a processing operation on suspicious data in a communication data set used for updating the machine learning model, and the suspicious data is data whose loss value is greater than the first loss threshold.

In a possible design solution, the processing operation includes a marking operation, and the marking operation is adding an easily identifiable marker to the suspicious data.

In a possible design solution, the processing operation includes a removing operation, and the removing operation is removing the suspicious data from the communication data set.

In a possible design solution, the first processing policy includes a first proportion threshold.

In a possible design solution, the first processing policy indicates the processing operation.

In a possible design solution, the method according to the third aspect may further include: obtaining a second processing policy of the first machine learning model, and sending the second processing policy to a model training function entity configured to update the first machine learning model. The second processing policy is capable of being used to perform a removing operation on error data in the communication data set used for updating the machine learning model, the second processing policy includes a third loss threshold, and if the machine learning model is updated by using the error data, a loss value for processing wireless communication data by using the updated machine learning model is greater than the third loss threshold.

Optionally, the removing operation is removing the error data from the communication data set.

In a possible design solution, the removing operation is specifically removing the error data in marked suspicious data from the communication data set, and the marked suspicious data is wireless communication data whose loss value is greater than a loss threshold in the communication data set.

Optionally, the second processing policy indicates the removing operation.

Optionally, the second processing policy further indicates that the communication data set needs to be obtained based on a first condition. The first condition includes at least one of the following: a next update periodicity of a machine learning model is currently entered, prediction accuracy of the machine learning model is lower than an accuracy threshold, or a proportion of suspicious data in wireless communication data that is obtained last time and that is used for updating the machine learning model is greater than a second proportion threshold, and current remaining duration until ending of machine learning model update is greater than threshold duration. The threshold duration is a sum of duration needed for obtaining the wireless communication data used for updating the machine learning model and duration needed for updating the machine learning model.

Optionally, the second processing policy further indicates that it needs to be determined, based on the second condition, to update the machine learning model. The second condition is that a proportion of marked suspicious data in the communication data set is less than or equal to the second proportion threshold.

Optionally, the second processing policy includes the second proportion threshold.

It may be understood that, for a technical effect of the method in the second aspect, refer to related descriptions in the methods according to the first aspect and the second aspect. Details are not described herein again.

According to a fourth aspect, a communication apparatus is provided. The communication apparatus includes a module configured to perform the method according to any one of the first aspect to the third aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory and the processor may be integrated together, or may be disposed separately. The memory may be configured to store instructions in methods according to any one of the first aspect to the third aspect.

In embodiments of this application, the communication apparatus according to the fourth aspect may be a network device, a chip (system) or another part or component that may be disposed in the network device, or an apparatus including the network device.

It may be understood that, for a technical effect of the apparatus in the fourth aspect, refer to related descriptions of the method according to any one of the first aspect to the third aspect. Details are not described again.

According to a fifth aspect, a communication apparatus is provided. The communication apparatus includes a processor. The processor is coupled to a memory. The processor is configured to execute instructions stored in the memory, to cause the communication apparatus to perform the method according to any one of the first aspect to the third aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this embodiment of this application, the communication apparatus according to the fifth aspect may be the network device according to any one of the first aspect to the third aspect, a chip (system) or another part or component that may be disposed in the network device, or an apparatus including the network device.

In addition, for a technical effect of the communication apparatus in the fifth aspect, refer to the technical effects of the method according to any one of the first aspect to the third aspect. Details are not described herein again.

According to a sixth aspect, a communication apparatus is provided. The communication apparatus includes a processor and a memory. The memory is configured to store instructions. When the processor executes the instructions, the communication apparatus is caused to perform the method according to any one of the first aspect to the third aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this embodiment of this application, the communication apparatus according to the sixth aspect may be the network device according to any one of the first aspect to the third aspect, a chip (system) or another part or component that may be disposed in the network device, or an apparatus including the network device.

In addition, for a technical effect of the communication apparatus in the sixth aspect, refer to the technical effects of the method according to any one of the first aspect to the third aspect. Details are not described herein again.

According to a seventh aspect, a chip is provided. The chip includes a controller and an interface circuit. The controller is configured to interact with another apparatus through the interface circuit, to perform the method according to any one of the first aspect to the third aspect.

According to an eighth aspect, a communication system is provided. The communication system includes at least one of the following: a model inference function entity configured to perform the method according to the first aspect, a model training function entity configured to perform the method according to the second aspect, or a model management function entity configured to perform the method according to the third aspect.

According to a ninth aspect, a computer-readable storage medium is provided. The computer-readable storage medium includes a computer program or instructions, and when the computer program or the instructions are run, the method according to any one of the first aspect to the third aspect is performed.

According to a tenth aspect, a computer program product is provided, and includes a computer program or instructions. When the computer program or the instructions are run, the method according to any one of the first aspect to the third aspect is performed.

### BRIEF DESCRIPTION OF DRAWINGS

FIG. 1 is a diagram of a structure of a neuron of a DNN;
FIG. 2 is a diagram of a network architecture of a DNN;
FIG. 3 is a schematic flowchart of AI-based beam management;
FIG. 4 is a diagram 1 of an architecture of a communication system according to an embodiment of this application;
FIG. 5a and FIG. 5b are a diagram 2 of an architecture of a communication system according to an embodiment of this application;
FIG. 6 is a schematic flowchart 1 of a model management method according to an embodiment of this application;
FIG. 7 is a schematic flowchart 2 of a model management method according to an embodiment of this application;
FIG. 8 is a schematic flowchart 3 of a model management method according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

### DESCRIPTION OF EMBODIMENTS

The technical solutions in embodiments of this application may be applied to various communication systems, for example, a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as 5.5G and a 6th generation (6th generation, 6G) mobile communication system.

For ease of understanding, the following first describes technical terms in embodiments of this application.

To improve network intelligence and automation, artificial intelligence (artificial intelligence, AI) and machine learning (machine learning, ML) technologies are increasingly applied to more fields. Research is being conducted across a plurality of fields, including the management domain, the core network (core network, CN) domain, and the radio access network (radio access network, RAN) domain, on how to use the AI/ML technologies to enable network intelligence. Currently, a 3rd generation partnership project (3rd generation partnership project, 3GPP) working group is conducting research on a plurality of studies related to network intelligence. To support use of a model in a network, lifecycle management of the model needs to be studied. A study on model management (study on artificial intelligence/machine learning, AIMLMGMT) in 3GPP SA5 has been successfully approved and discussions have started, focusing on lifecycle management of models in 5GS (including the management domain, RAN domain, and core network domain), including capabilities such as model training, inference, performance evaluation, deployment, testing, and updating.

In a current 3GPP standard, use cases in which an AI model is used include channel state information (channel state information, CSI) feedback, positioning, and beam management of a RAN1, and energy saving management, load balancing, and mobility optimization of a RAN3. Model lifecycle management procedures in the foregoing use cases are similar. For ease of understanding, AI-beam management is used as an example to describe the working procedure.

### AI-based beam management:

Machine learning is an important technical way to implement artificial intelligence. The machine learning may be divided into supervised learning, unsupervised learning, and reinforcement learning.

For the supervised learning, based on a collected sample value and a sample label, a mapping relationship between the sample value and the sample label is learned by using a machine learning algorithm, and the learned mapping relationship is expressed by using a machine learning model. A process of training the machine learning model is a process of learning the mapping relationship. For example, during signal detection, a received signal with noise is a sample, and a real constellation point corresponding to the signal is a label. Machine learning aims to learn a mapping relationship between a sample and a label through training, that is, enable the machine learning model to learn a signal detector. During training, a model parameter is optimized by calculating an error between a predicted value of a model and a ground-truth label. Once the mapping relationship is learned, each new sample label can be predicted by using the learned mapping. The mapping relationship learned through supervised learning may include linear mapping and non-linear mapping. A learning task may be classified into a classification task and a regression task based on a type of a label.

For unsupervised learning, an internal pattern of a sample is explored autonomously by using an algorithm based only on a collected sample value. For a specific type of algorithm of the unsupervised learning, a sample is used as a supervised signal. In other words, a model learns a mapping relationship between samples. This is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from the supervised learning and the unsupervised learning, the reinforcement learning does not have clear "correct" action label data. The algorithm needs to interact with an environment to obtain a reward signal fed back by the environment and adjust a decision action to obtain a larger reward signal value. For example, in downlink power control, a reinforcement learning model adjusts downlink transmit power of each user based on a total system throughput fed back by a wireless network, thereby aiming to obtain a higher system throughput. A goal of the reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

A deep neural network (deep neural network, DNN) is a specific implementation form of machine learning. According to a universal approximation theorem, the neural network can approximate any continuous function in theory, so that the neural network has a capability of learning any mapping. A conventional communication system needs to design a communication module with rich expert knowledge. However, a DNN-based deep learning communication system can automatically discover an implicit pattern structure from a large quantity of data sets, establish a mapping relationship between data, and obtain performance better than that of a conventional modeling method.

An idea of the DNN comes from a neuron structure of brain tissue. Each neuron performs a weighted summation operation on input values of the neuron, and generates an output based on a weighted summation result by using a non-linear function.

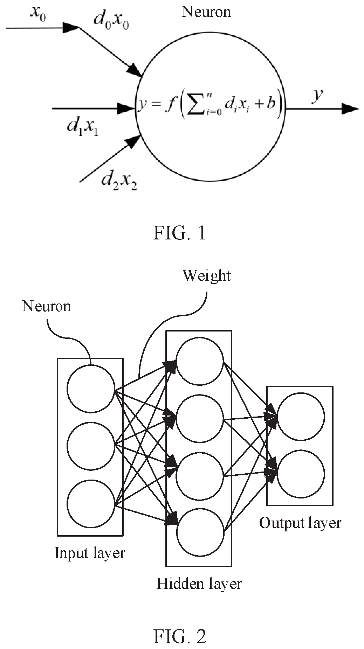

As shown in FIG. 1, for example, it may be assumed that an input of a nerve is x = [x₀, ... , xₙ], a weight corresponding to the input is d = [d₀, ... , dₙ], a bias for a weighted sum is b, and forms of the non-linear function may be diversified, for example, may be a maximum value function of max{0, x}. In this way, an execution effect of one neuron may be $max \left\{0, {\sum }_{i = 0}^{n} {d}_{i} {x}_{i} + b\right\}$ . A weight of each neuron is a model parameter of the DNN. The model parameter can be optimized in a training process, so that the DNN has a data feature extraction capability and a mapping relationship expression capability. The DNN usually optimizes the model parameter according to a supervised learning or unsupervised learning strategy.

As shown in FIG. 2, the DNN usually has a multi-layer structure. Each layer of the DNN may include a plurality of neurons. An input layer of the DNN processes a received value by using a neuron, and then transfers a processed value to an intermediate hidden layer. The DNN usually has more than one hidden layer, and the hidden layer usually directly affects an information extraction capability and a function fitting capability. Increasing a quantity of hidden layers of the DNN or increasing a width of each layer can improve the function fitting capability of the DNN. Then, the hidden layer of the DNN processes a received value by using a neuron, and then transfers a calculation result to a final output layer, to generate a final output of the DNN.

According to a network construction manner, the DNN may be classified into a feed forward neural network (feed forward neural network, FNN), a convolutional neural network (convolutional neural network, CNN), and a recurrent neural network (recurrent neural network, RNN).

A characteristic of the FNN is that every two neurons at adjacent layers are completely connected. Therefore, the FNN usually requires a large amount of storage space, resulting in high computing complexity.

The CNN is a neural network dedicated to processing data with a grid-like structure. For example, both time-series data (time axis discrete sampling) and image data (two-dimensional discrete sampling) may be considered as the data of the similar grid structure. The CNN performs a convolution operation by extracting some information through a window with a fixed size, instead of performing an operation based on all input information at once. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time-series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. Actually, there may be a neural network of another type or structure, and details are not described herein again. In addition, the neural network mentioned in embodiments of this application may alternatively be replaced with any other possible description, for example, a neural network model, a network model, an AI model, or an AI network model. This is not limited herein.

After the AI model is introduced into beam management, a terminal may predict, based on the AI model, which beams can be used as optimal beams, thereby further reducing beam management overheads. Data distribution of the AI model changes over time. As a result, a model prediction error increases. This phenomenon is referred to as model drift. To resolve the model drift, new data needs to be periodically used to retrain the model, so as to maintain prediction performance of the model.

The following specifically describes a model update procedure of AI-based beam management.

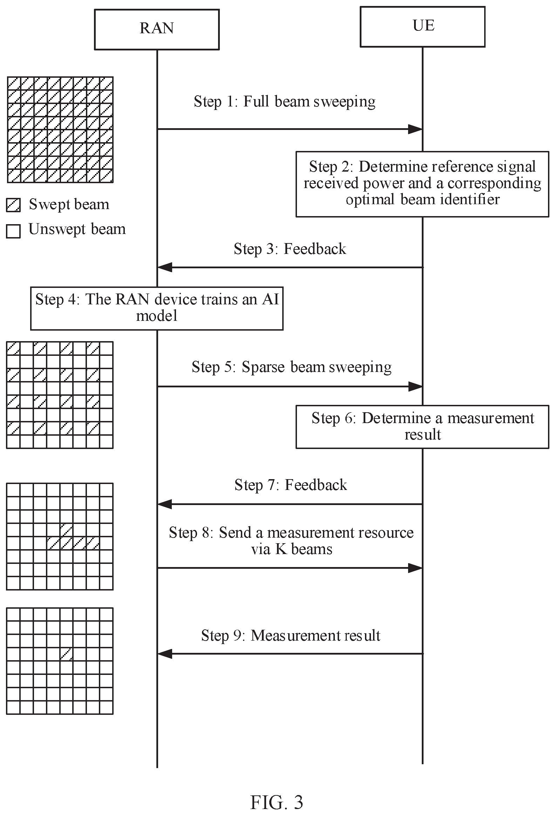

As shown in FIG. 3, a specific procedure is as follows.

Step 1 to Step 3: A RAN device collects training data used for training or retraining. For example, the RAN device first performs full-beam sweeping, so that UE determines reference signal received power (reference signal received power, RSRP) and an identifier (identifier, ID) of a corresponding optimal beam, and feeds back the reference signal received power and the identifier of the corresponding optimal beam to the RAN device.

Step 4: The RAN device trains an AI model. For example, the RAN device may perform forward calculation and backward feedback propagation based on the collected training data until the model converges, thereby obtaining a trained AI model that can be used for predicting an ID of an optimal beam.

Step 5 to Step 7: The RAN device predicts an ID of a possible optimal beam by using the AI model. For example, the RAN device first performs a first round of sparse beam sweeping. For example, a base station may send, in a horizontal direction, eight beams in different directions, or may send, in a vertical direction, eight beams in different directions, and there are 64 beams in total. A sparse beam may be selected from the 64 beams, and a quantity of sparse beams is usually 1/4 of a total quantity of beams. In the first round of sparse beam sweeping, a terminal may receive, by using a beam, a measurement resource sent by the RAN device by using the sparse beam, to determine a measurement result, for example, RSRP, and feed back the measurement result to the RAN device. The RAN device may input the measurement result into the AI model, to obtain IDs of K beams. The K beams are beams that are most likely to be the optimal beams, as predicted by using the AI model. A value of K may be preconfigured by using the AI model, for example, may be 3, 4, or 5.

Step 8 and Step 9: The RAN device determines the ID of the optimal beam. The RAN device sends the measurement resource via the determined K beams. Correspondingly, the terminal may receive, by using the beams, the measurement resource sent by the RAN device via the K beams, to determine the measurement result, and finally report, to the RAN device, the measurement resource corresponding to the optimal beam.

However, AI models in the wireless field face security threats, mainly including but not limited to poisoning attacks, in each phase of the lifecycle of the AI models. For example, training data of an AI model in the wireless field is generally obtained from a live network. Therefore, there is a security risk that an attacker may inject a poison sample into data collected from the live network, causing a decrease in precision of a trained model. The foregoing AI-based beam management is used as an example. Fake UE held by an attacker reports intentionally forged poisoning data (for example, false RSRP) to the RAN device, and the data is collected as training data for model update. In this way, an incorrect prediction model, for example, an incorrect classification boundary, is trained. Consequently, prediction performance of a (re)trained model degrades.

In addition, trustworthiness management of the AI model in the wireless field is also discussed in an R18 phase in 3GPP. In TR 28.908 in 3GPP, a clear requirement for the trustworthiness management of the AI model is made: The trustworthiness management should be added to model training, testing, and inference phases to enhance robustness and security of the AI model, and the AI model should be periodically updated and maintained. In a current 3GPP standard, data collection is mainly managed, including specifying management specifications for procedures such as data collection, labeling, and processing, and protecting user privacy. However, these measures do not implement trustworthiness management for a wireless AI model in the wireless field, and therefore, have achieved a limited effect. In addition, no in-depth research is performed on a security vulnerability of the model. Therefore, there is no defense policy for the AI model in the wireless field.

Therefore, to reduce the security risk in the wireless field, necessary security protection measures need to be taken across a plurality of phases of the model lifecycle, such as training, deployment, and updating, to improve model security.

For the foregoing technical problems, embodiments of this application provide the following technical solutions.

The following describes technical solutions of this application with reference to accompanying drawings.

In embodiments of this application, "indicate" may include a direct indication and an indirect indication, or may include an explicit indication and an implicit indication. Information indicated by specific information is referred to as to-be-indicated information. In a specific implementation process, the to-be-indicated information may be indicated in a plurality of manners. For example, but not limited to, the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to a conventional technology. Details are not described in this specification. It can be learned from the foregoing descriptions that, for example, when a plurality of pieces of information of a same type need to be indicated, different information may be indicated in different manners. In a specific implementation process, a needed indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information and sent separately. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

In this application, "sending information" may be understood as that a device sends information to another device, or may be understood as that in a device, a logical module sends information to another logical module. For example, "a network device sends information" may be understood as that the network device sends information to another device (for example, a terminal or another network device), or may be understood as that a logical module 1 in the network device sends information to a logical module 2 in the network device.

In this application, "receiving information" may be understood as that a device receives information from another device, or may be understood as that in a device, a logical module receives information from another logical module. For example, "a network device receives information" may be understood as that the network device receives information from another device (for example, a terminal or another network device), or may be understood as that a logical module 1 in the network device receives information from a logical module 2 in the network device.

In this application, "sending information to... (for example, a terminal)" or a related illustration in the accompanying drawings may be understood as that a destination of the information is the terminal, and may include directly or indirectly sending the information to the terminal. "Receiving information from... (for example, a terminal)" or "receiving information that is from... (for example, a terminal)" or "receiving information sent by (for example, a terminal)" or a related illustration in the accompanying drawings may be understood as that a source of the information is the terminal, and may include directly or indirectly receiving information from the terminal. Necessary processing, for example, a format change, may be performed on the information between the source and the destination to which the information is sent, but the destination can understand valid information from the source. A similar expression in this application may be understood similarly. Details are not described herein again.

"Predefinition" or "pre-configuration" may be implemented by pre-storing corresponding code or a corresponding table in a device, or may be implemented in another manner that may indicate related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, descriptions such as "when ...", "in a case of ...", "in the event that", and "if" all mean that a device performs corresponding processing in an objective case, and do not limit time, and the device is not required to perform a determining action during implementation. This does not mean that there is another limitation.

In descriptions of embodiments of this application, unless otherwise stated, "/" means an "or" relationship between associated objects. For example, A/B may indicate A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used for representing giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system is first used as an example to describe in detail a communication system applicable to embodiments of this application.

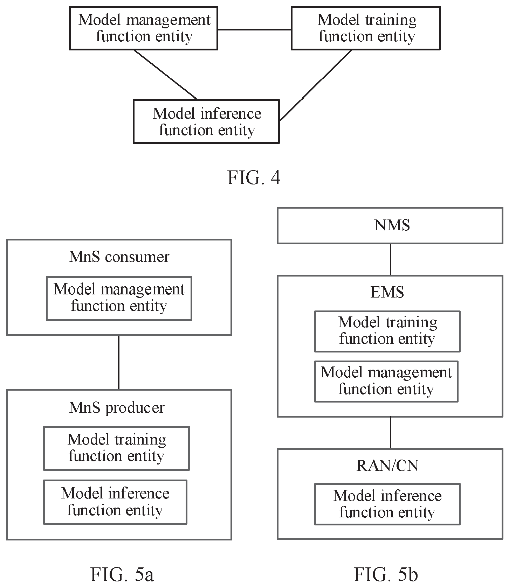

As shown in FIG. 4, for example, the communication system mainly includes at least one of the following: a model training function entity, a model inference function entity, and a model management function entity.

The model training function entity may also be referred to as a training function for short, or may have any other possible name, and is mainly responsible for AI model training, and generating an AI model after the training ends. The model inference function entity may also be referred to as an inference function for short, or may have any other possible name, and is mainly responsible for AI model inference, and inputting data into the model to obtain a corresponding prediction output. The model management function entity may also be referred to as a management function for short, or may have any other possible name, and is mainly responsible for model management, including performance management, update management, deployment management, and the like.

FIG. 5a and FIG. 5b are a diagram of an application scenario of the communication system. As shown in FIG. 5a, for a service-based architecture, a management service (management service, MnS) producer (MnS producer) may provide a management service externally. A management service consumer (MnS consumer) can invoke the management service. The management service producer may have an AI/ML model training function entity and an inference function. In other words, the model training function entity and the model inference function entity may be deployed in the management service producer, or correspond to the management service producer. The model management function entity may be deployed in the management service consumer, or may correspond to the management service consumer.

As shown in FIG. 5b, a management domain and a service domain are used as an example, and a network management system (network management system, NMS) and an element management system (element management system, EMS) both belong to devices in the management domain. The NMS is mainly responsible for network operation, management, and maintenance functions, for example, managing the EMS, and may be referred to as a cross-domain management system. The EMS is mainly configured to manage one or more network elements of a specific type, for example, manage a network element such as an AN network element (for example, a RAN device) or a CN network element in a service domain, and may also be referred to as a domain management system or a single-domain management system. The NMS/EMS may be a conventional cross-domain/single-domain network management device, or may be a set of some management functions of cross-domain management (cross-domain management)/single-domain management (domain management). Alternatively, the NMS and the EMS may also be collectively referred to as a 3GPP management system or operations, administration, and maintenance (Operations, Administration, and Maintenance, OAM) module.

The model management function entity may be deployed in the NMS/EMS, the model training function entity is deployed in the EMS, and the model inference function entity may be correspondingly deployed in the RAN device or the CN network element. Alternatively, both the model training function entity and the model inference function entity may be deployed in the RAN device or the CN network element. For example, the model training function entity is deployed in a mobile intelligent engine (mobile Intelligent Engine, MIF), and the inference function may be deployed in an aggregation network element (central unit, CU) or a distributed unit (distributed unit, DU). That is, the model training function entity and the model inference function entity are respectively deployed in two modules in a gNB. Alternatively, in an O-RAN standard architecture, in a possible deployment solution, the model training function entity is deployed in a non-real-time radio access network intelligent controller (O-RAN non-real-time RAN intelligent controller, Non-RT RIC) or a near-real-time radio access network intelligent controller (O-RAN near-real-time RAN intelligent controller, Near-RT RIC), and in a possible deployment solution, the model inference function entity is deployed in an O-RAN aggregation network element (O-CU) or an O-RAN distributed unit (O-DU) in the gNB.

It may be understood that the EMS, the RAN device, and the CN network element may also correspond to the management service producer in FIG. 5a and FIG. 5b, and the NMS may also correspond to the management service consumer in FIG. 5a and FIG. 5b.

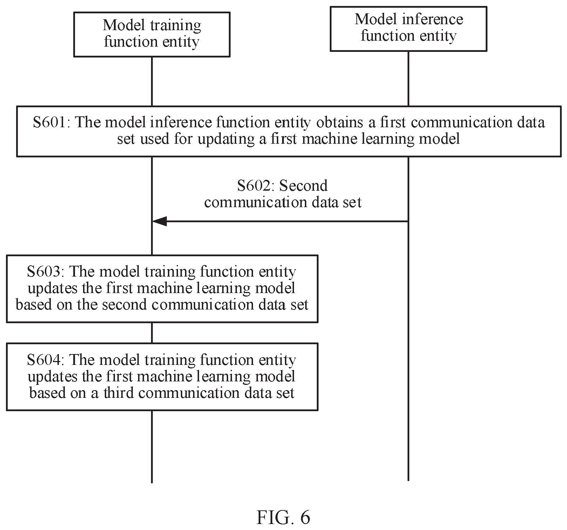

With reference to FIG. 6 to FIG. 8, the following specifically describes an interaction procedure between network elements/devices in the foregoing communication system by using method embodiments. The model management method provided in embodiments of this application is applicable to the foregoing communication system, and is specifically applied to various scenarios mentioned in the foregoing communication system. Details are described below.

FIG. 6 is a schematic flowchart of a model management method according to an embodiment of this application. The model management method is applicable to the foregoing communication system, and mainly includes interaction between a model inference function entity and a model training function entity. It may be understood that the method in this embodiment of this application includes model retraining. In the following, unless otherwise specified, "training" mentioned below may be understood as "retraining".

As shown in FIG. 6, a procedure of the model management method is as follows.

S601: The model inference function entity obtains a first communication data set used for updating a first machine learning model.

A machine learning model (denoted as the first machine learning model) may be used to manage a wireless communication service, or may be used to ensure a wireless communication service. For example, the first machine learning model may be a model for AI-based beam management or a model for beam selection, or may be a model, such as a downlink/uplink data volume prediction model, a channel fading change prediction model, a CSI feedback model, or an AI-assisted positioning model, in another management scenario in wireless communication. This is not specifically limited herein. A type of the first machine learning model may be a DNN, and may be specifically an FNN, a CNN, or an RNN, or certainly may be another type of model. This is not specifically limited in embodiments of this application.

The first communication data set may be a set of wireless communication data collected and fed back by a terminal, for example, includes wireless communication data between an access network device corresponding to a model inference function and a plurality of terminals, and may specifically include data such as reference signal received power (RSRP), a channel state information matrix, and a channel impulse response, which are used to ensure a service in a wireless communication process. In addition, the first communication data set may further include a label, and the label may be used for marking a true value of the wireless communication data in a corresponding scenario, and may be selected based on an actual situation. RSRP in an AI-based beam management scenario is used as an example. For another scenario, refer to the descriptions for understanding. Details are not described again. The wireless communication data may include the RSRP and an identifier of a beam corresponding to the RSRP. A label may be used for marking whether the beam indicated by the identifier of the beam is an optimal beam corresponding to the RSRP. For example, the label includes two values: 0 and 1, where 1 indicates that the beam indicated by the identifier of the beam is the optimal beam corresponding to the RSRP, and 0 indicates that the beam indicated by the identifier of the beam is not the optimal beam corresponding to the RSRP. The first communication data set may include suspicious data whose loss value is greater than a first loss threshold. If a proportion of the suspicious data in the first communication data set exceeds a first proportion threshold, the model inference function entity may remove the suspicious data. Otherwise, the model inference function entity may only mark the suspicious data. For details, refer to the following related descriptions in S602. Details are not described herein again.

The model inference function entity may be triggered by another device to obtain the first communication data set. For example, the model training function entity may send first indication information to the model inference function entity. The model inference function entity receives the first indication information from the model training function entity, and receives the wireless communication data from the plurality of terminals based on the first indication information, to obtain the first communication data set, so as to implement on-demand obtaining and avoid redundancy.

The first indication information may indicate that the first machine learning model needs to be updated. For example, the first indication information may carry an identifier of the first machine learning model, which is used to indicate that the first machine learning model needs to be updated, or the first indication information may have an association relationship with the identifier of the first machine learning model. After receiving the first indication information, the model inference function entity learns that the first machine learning model associated with the first indication information needs to be updated. Certainly, the first indication information may be alternatively implemented in another manner. This is not limited in embodiments of this application. The first indication information may be carried in any possible signaling/message. This is not limited in embodiments of this application. In addition, the first indication information may further indicate another parameter, for example, a type of data that needs to be collected, for example, whether the beam corresponding to the RSRP is the optimal beam, a location of the terminal, or an amount of data that needs to be collected.

The model training function entity may send the first indication information to the model inference function entity based on a first condition. The first condition may include at least one of the following: a condition A, a condition B, or a condition C. The following separately describes the conditions.

Condition A: A next update periodicity of a machine learning model is currently entered.

The model training function entity may periodically and dynamically update the machine learning model. The model training function entity may update a periodicity of the machine learning model, and determine that the next update periodicity of the machine learning model is currently entered, to collect, by delivering the first indication information, data, for example, the first communication data set, needed for updating the first machine learning model this time. In addition, a periodicity of updating the machine learning model may be obtained in advance by the model training function entity from the model management function entity. For details, refer to the following related descriptions. Details are not described herein again.

Condition B: Prediction accuracy of the machine learning model is lower than an accuracy threshold. In this case, the model needs to be updated to improve precision of the model.

The prediction accuracy of the machine learning model may represent performance of the machine learning model, and may also be referred to as precision of the machine learning model. When the prediction accuracy of the machine learning model is lower than the accuracy threshold, an update of the machine learning model is needed to adapt to a current environment and improve precision. Therefore, the model training function entity may obtain the prediction accuracy of the first machine learning model from the model inference function entity. If the prediction accuracy of the first machine learning model is lower than the accuracy threshold, the model training function collects, by delivering the first indication information, the data needed for updating the first machine learning model this time. In addition, the accuracy threshold may be obtained in advance by the model training function entity from the model management function entity. For details, refer to the following related descriptions. Details are not described herein again.

Condition C: A proportion of suspicious data in wireless communication data that is obtained last time and that is used for updating the machine learning model is greater than a second proportion threshold, and current remaining duration until ending of machine learning model update is greater than threshold duration.

The second proportion threshold may also represent an upper limit of a proportion of suspicious data allowed in the communication data set for normal training. If the proportion of the suspicious data in the wireless communication data that is obtained last time and that is used for updating the machine learning model is greater than the second proportion threshold, that is, exceeds the upper limit, it indicates that a quantity of samples of normal data is insufficient to update the first machine learning model this time. Therefore, the model training function entity may determine, based on maximum waiting duration for update this time and duration that has been spent on the update this time, remaining duration until ending of model update in a current periodicity. The model training function entity may estimate whether duration needed for recollecting data and updating the model is less than or equal to the remaining duration. If the duration is less than or equal to the remaining duration, the model training function entity may recollect, by delivering the first indication information, data needed for updating the first machine learning model this time, to ensure a model update effect this time by re-obtaining the data. Otherwise, if the duration is greater than the remaining duration, the model training function entity may determine that the update this time has failed. In addition, the maximum waiting duration may be obtained in advance by the model training function entity from the model management function entity. For details, refer to the following related descriptions. Details are not described herein again.

It may be understood that the condition A and the condition B are not only applicable to a case in which the model inference function entity marks suspicious data, but also applicable to a case in which the model inference function entity removes suspicious data. For details, refer to the following related descriptions in S602. Details are not described herein again. The condition C is applicable only to a case in which the model inference function entity marks suspicious data. In other words, if the model training function entity knows in advance that the model inference function entity marks the suspicious data, the model training function entity may analyze, based on the condition C, the wireless communication data obtained from the model inference function entity. For details, refer to the following related descriptions in S602. Details are not described herein again.

Optionally, when the condition C is applicable, the model training function entity may further send a second loss threshold to the model inference function entity, and correspondingly, the model inference function entity may receive the second loss threshold from the model training function entity. The second loss threshold may be less than a loss threshold, for example, the first loss threshold, preconfigured by the model inference function entity, to lower a threshold for defining suspicious data by the model inference function entity, and ensure that more normal data can be provided for training through re-collection. In addition, the second loss threshold may be delivered together with the first indication information, for example, in same signaling or a same message, or may be separately delivered. This is not limited herein.

S602: The model inference function entity sends a second communication data set to the model training function entity.

The second communication data set may be obtained by performing a processing operation on suspicious data in the first communication data set according to a first processing policy, for example, may also include the wireless communication data between the access network device and the plurality of terminals. The first processing policy is capable of being used to perform the processing operation on data (for example, the suspicious data) in the communication data set used for updating the machine learning model.

The suspicious data may be considered as data suspected of being a poisoning attack, and may be specifically wireless communication data whose loss value is less than or equal to a loss threshold (denoted as the first loss threshold). For example, an attacker of the poisoning attack may maliciously change a label of the wireless communication data, causing a large loss value of training and affecting model convergence. Therefore, the loss value of the wireless communication data may reflect, to some extent, whether the data is poisoning attack data, so that the wireless communication data whose loss value is greater than the loss threshold in the communication data set may be considered as the data suspected of being a poisoning attack, that is, the suspicious data. On the contrary, if the loss value of the wireless communication data in the communication data set is less than or equal to the first loss threshold, the wireless communication data may be considered as normal data, or in other words, not poisoning attack data, that is, the normal data is also the wireless communication data whose loss value is less than or equal to the first loss threshold. In addition, for how to determine the loss value of the wireless communication data, refer to the following related descriptions. Details are not described herein again.

The first loss threshold may be indicated by the first processing policy. For example, the first processing policy may explicitly indicate the first loss threshold, for example, include the first loss threshold. In other words, the first loss threshold may be dynamically configured along with the first processing policy, so that the first loss threshold can be dynamically adjusted based on an actual requirement. Alternatively, the first processing policy may implicitly indicate the first loss threshold. For example, the first processing policy and the first loss threshold are associated. Obtaining the first processing policy indicates that the first loss threshold needs to be used. In this case, the first loss threshold may also be preconfigured locally on the model inference function entity, to avoid overheads caused by configuration. A value of the first loss threshold may be a value that ranges from 0 to 1, for example, 0.4, 0.5, or 0.6. A specific value may be selected based on an actual situation. This is not limited herein.

The processing operation can be used to mark the suspicious data or remove the suspicious data. For example, the processing operation may include a marking operation, and the marking operation is adding an easily identifiable marker to the suspicious data, or marking the suspicious data, to subsequently identify which data is the suspicious data, prevent the suspicious data from affecting retraining of the first machine learning model, and ensure an effect of model retraining. For example, a transmit end adds a corresponding marker to the suspicious data, where the mark may be a special information element, character, or field, and the transmit end does not add the marker to the normal data. A receive end may determine, by determining whether the received wireless communication data has the marker, whether the wireless communication data is suspicious data or normal data. The processing operation may further include a removing operation, which is denoted as a removing operation #1. The removing operation #1 is removing the suspicious data from the communication data set, for example, deleting or releasing the suspicious data, to avoid subsequently retraining the first machine learning model by using the suspicious data, and ensure an effect of model retraining.

The marking operation may be performed when the proportion of the suspicious data in the communication data set used for updating the machine learning model is greater than or equal to the first proportion threshold. On the contrary, the removing operation #1 may be performed when the proportion of the suspicious data in the communication data set used for updating the machine learning model is less than the first proportion threshold. The first proportion threshold may represent an upper limit of a proportion of suspicious data allowed in the communication data set for normal training. In other words, if the proportion of the suspicious data in the communication data set is less than or equal to the first proportion threshold, it indicates that there is a small amount of the suspicious data. Even if the suspicious data is removed, a quantity of samples of remaining normal data in the communication data set can still complete normal training of the machine learning model. Therefore, the model inference function entity may perform the removing operation #1. On the contrary, if the proportion of the suspicious data in the communication data set is greater than the first proportion threshold, it indicates that there is an excessively large proportion of the suspicious data. If the suspicious data is directly removed, the quantity of samples of the normal data may not support the normal training of the machine learning model. Therefore, the model inference function entity may perform the marking operation, so that the model training function entity determines whether to use or remove the suspicious data. Certainly, the marking operation or the removing operation #1 may alternatively be performed by default. For example, the marking operation is performed by default, or the removing operation #1 is performed by default.

The first processing policy may alternatively indicate the processing operation, for example, explicitly or implicitly indicate the processing operation. For a specific implementation principle, refer to the foregoing descriptions for understanding. Details are not described herein again.

It should be understood that the first processing policy is an example name, and may be replaced with any possible name, for example, a first trust processing policy or a first training data processing policy. This is not limited in embodiments of this application.

In this embodiment of this application, the model inference function entity may process the first communication data set by using the first machine learning model, to determine the suspicious data in the first communication data set. In other words, the model inference function entity may perform inference calculation on the first communication data set by using the first machine learning model, to determine the suspicious data in the first communication data set. For example, the model inference function entity may process, by using the first machine learning model, the first communication data set according to the first processing policy, to obtain a processing result of each piece of wireless communication data in the first communication data set, and determine a loss value of each piece of wireless communication data based on the processing result of the piece of wireless communication data and a label of the piece of wireless communication data, so as to determine the wireless communication data whose loss value is greater than the first loss threshold as the suspicious data.

For ease of understanding, the AI-based beam management scenario is still used as an example. For another scenario, refer to the descriptions for understanding. Details are not described again. A processing result of wireless communication data #1 may be a probability that a beam corresponding to RSRP #1 is an optimal beam, which is, for example, 0.8. If a label of the RSRP #1 indicates that the beam corresponding to the RSRP #1 is the optimal beam, that is, the label is 1, a loss value of the wireless communication data #1 is 0.2. Similarly, a processing result of wireless communication data #2 may be a probability that a beam corresponding to RSRP #2 is an optimal beam, which is, for example, 0.7. If a label of the RSRP #2 indicates that the beam corresponding to the RSRP #2 is not the optimal beam, that is, the label is 0, a loss value of the wireless communication data #2 is 0.7. Assuming that the first loss threshold is 0.4, the wireless communication data #1 is normal data, and the wireless communication data #2 is suspicious data. That is, generally, a processing result of data should be close to a label of the data. If a difference between the processing result of the data and the label of the data is large, it may be that an attacker of poisoning has intentionally tampered with the label of the data, for example, changed "the beam corresponding to the RSRP #2 is the optimal beam" to "the beam corresponding to the RSRP #2 is not the optimal beam", to affect model training. Therefore, suspicious data with a potentially tampered label may be filtered out by setting the first loss threshold.

The model inference function entity may further determine the proportion of the suspicious data in the first communication data set according to the first processing policy. For example, it can be learned from the foregoing related descriptions of the processing operation that, if the model inference function entity determines that the proportion of the suspicious data in the first communication data set is greater than the first proportion threshold, the model inference function entity may perform the marking operation, for example, add the easily identifiable marker to the suspicious data in the first communication data set, to obtain the second communication data set. If the model inference function entity determines that the proportion of the suspicious data in the first communication data set is less than or equal to the first proportion threshold, the model inference function entity may perform the removing operation #1, for example, remove the suspicious data from the first communication data set, to obtain the second communication data set. Then, the model inference function entity may send the second communication data set to the model training function entity, for example, send signaling/a message, which may be specifically existing signaling/an existing message or newly defined signaling/a newly defined message, carrying the second communication data set. This is not limited herein. Correspondingly, the model training function entity may obtain the second communication data set, for example, receive the second communication data set from the model inference function entity.

Optionally, if the model inference function entity obtains the second loss threshold from the model training function entity, the model inference function entity may replace the first loss threshold with the second loss threshold, and determine the suspicious data in the first communication data set by using the second loss threshold.

It may be understood that it is merely an example that the model training function entity performs the marking operation or the removing operation #1 based on the proportion of the suspicious data in the communication data set. This is not limited. For example, the model training function entity may perform the marking operation by default, or may perform the removing operation #1 by default.

For the model training function entity, the model training function entity may determine whether the second communication data set is obtained by performing the removing operation #1, or is obtained by performing the marking operation. If the second communication data set is obtained by performing the removing operation #1, for example, is a communication data set from which suspicious data has been removed, the model training function entity may perform the following S603; otherwise, if the second communication data set is obtained by performing the marking operation, for example, is a communication data set in which suspicious data has been marked, the model training function entity may perform the following S604. The following separately describes S603 and S604.

S603: The model training function entity updates the first machine learning model based on the second communication data set.

The model training function entity may train the first machine learning model by using the second communication data set, and when convergence is achieved, determine that training ends, to obtain an updated machine learning model that is denoted as a second machine learning model.

S604: The model training function entity updates the first machine learning model based on a third communication data set.

The third communication data set may be obtained by performing a removing operation (denoted as a removing operation #2) on suspicious data or error data in the second communication data set according to a second processing policy. The second processing policy is capable of being used to perform the removing operation #2 on the suspicious data or error data in the communication data set used for updating the machine learning model. For example, the second processing policy may indicate the removing operation #2, for example, explicitly or implicitly indicate the removing operation #2. For a specific implementation principle, refer to the foregoing descriptions for understanding. Details are not described herein again. The error data may be poisoning attack data. A characteristic of the error data may be that if the first machine learning model is updated by using the error data, an effect of processing wireless communication data by using the updated machine learning model is poor, and a loss value of the updated machine learning model is usually large, for example, greater than a third loss threshold.

The following describes in detail whether the model training function entity performs the removing operation #2 on the suspicious data or the error data.

For example, the second processing policy may further indicate a second condition, for example, explicitly or implicitly indicate the second condition. For a specific implementation principle, refer to the foregoing descriptions for understanding. Details are not described herein again. The second condition may indicate that a proportion of suspicious data in a communication data set is less than or equal to the second proportion threshold. In this way, the model training function entity may determine, based on the second condition, whether to update the first machine learning model.

If the proportion of the suspicious data in the second communication data set is less than or equal to the second proportion threshold, it indicates that there is a small amount of the suspicious data. Even if the suspicious data is removed, a quantity of samples of remaining normal data in the second communication data set can still complete normal training of the first machine learning model. Therefore, the model inference function entity may perform the removing operation #2, for example, remove the suspicious data from the second communication data set.

If the proportion of the suspicious data in the second communication data set is greater than the second proportion threshold, it indicates that if the suspicious data is removed, the quantity of samples of the remaining normal data in the second communication data set may not be able to complete the normal training of the first machine learning model. Therefore, the model training function entity may choose, based on the first condition, for example, the condition C, to re-obtain wireless communication data used for updating the machine learning model, that is, return to perform S601. Alternatively, the model training function entity may choose to remove the error data from the second communication data set. Specifically, the model training function entity may remove, from the second communication data set, error data in the suspicious data. Details are described below.

For example, the second processing policy may include a third loss threshold. The model training function entity may determine, by using the third loss threshold, which data in the suspicious data is the error data. For example, the model training function entity divides the suspicious data into M data subsets. M is an integer greater than 1, and a value of M may be set based on an actual situation. This is not limited herein. The model training function entity may update the first machine learning model by using an i^{th} data subset in the M data subsets, where i traverses 1 to M, to obtain an i^{th} updated machine learning model. The model training function entity may process test data by using an i^{th} updated machine learning model, where i traverses 1 to M, to obtain an i^{th} test result. The test data may include wireless communication data that is preconfigured by the model training function entity and that is used for testing a model training effect. If a loss value of test data in the i^{th} test result is greater than the third loss threshold, the model training function entity determines that the i^{th} data subset is the error data; otherwise, the model training function entity determines that the i^{th} data subset is not the error data.

In other words, because a function of poisoning attack data is to affect model training, the model training function entity may pre-train the machine learning model by using the suspicious data, to determine, based on a training result, suspicious data that does not contribute to model training as the error data. For example, the machine learning model is trained by using normal data. Because training causes the machine learning model to converge, when an updated machine learning model is used to process the test data, a processing result of the updated machine learning model should be close to a corresponding label, that is, a loss value is small. For example, the processing result is that a probability value is 0.9, the label is 1, and a loss value is small, which is 0.1. If the machine learning model is trained by using the error data, the error data suppresses convergence of the machine learning model, resulting in a significant difference between a processing result obtained by processing the test data by using the updated machine learning model and a corresponding label that the processing result is close to. For example, the processing result is that a probability value is 0.7, the label is 1, and a loss value is large, which is 0.3. In this case, if the third loss threshold is set to 0.2, the model training function entity may distinguish between normal data and error data.

It should be understood that, the suspicious data is divided into a plurality of data subsets, so that error data can be further removed at a granularity of a data subset. Compared with removing all suspicious data, this method offers a more refined granularity, and allows normal data to be retained. In addition, because computing power of the model training function entity is stronger than that of the model inference function entity, when the model inference function entity cannot distinguish which data in the suspicious data is normal data and which data is poisoning attack data, the model training function entity may remove, by using a more refined removing operation, data that is actually poisoning attack data from the suspicious data, and use the normal data in the suspicious data for model training, to improve utilization of training data. Certainly, it is merely an example that the model training function entity determines the error data from the suspicious data. For example, the model training function entity may divide the second communication data set into a plurality of data subsets, and determine error data from the plurality of data subsets.

After performing the removing operation #2 on the suspicious data or the error data in the second communication data set, the model training function entity may train the first machine learning model by using the normal data in the second communication data set, and when convergence is achieved, determine that training ends, to obtain the second machine learning model.

It should be understood that the second processing policy is an example name, and may be replaced with any possible name, for example, a second trust processing policy or a second training data processing policy. This is not limited in embodiments of this application. In addition, the second processing policy may further indicate the first condition, for example, explicitly or implicitly indicate the first condition. For a specific implementation principle, refer to the foregoing descriptions for understanding. Details are not described herein again.

It should be further understood that, because a main objective of the poisoning attack is to affect a training effect of the model and reduce training precision of the model, a main function of the poisoning attack data is to suppress a convergence effect of model training, that is, a loss value of the training model is large. Based on this, the model training function entity may also determine, in a manner similar to that of the foregoing model inference function entity, data whose loss value is greater than the first loss threshold in the first communication data set as error data, for example, poisoning attack data, and remove the error data, to avoid an adverse impact on training of the first machine learning model, and reduce a data security risk of an AI model in the wireless field.

In conclusion, a main objective of the poisoning attack is to affect a training effect in a model retraining update process and reduce training precision of the model, that is, a loss value of an updated model on poisoning data is large. Based on this, the model inference function entity may determine data whose loss value is greater than the first loss threshold in the first communication data set as suspicious data, or data suspected of being a poisoning attack, and process the data, to avoid an adverse impact on training of the first machine learning model, and reduce a data security risk of an AI model in the wireless field.

In addition, the model training function entity may also determine, in a manner similar to that of the foregoing model inference function entity, data whose loss value is greater than the first loss threshold in the first communication data set as error data, for example, poisoning attack data, and remove the data, to avoid an adverse impact on training of the first machine learning model, and reduce a data security risk of an AI model in the wireless field.

With reference to the foregoing method, in a first possible design solution, the method may further include: The model management function entity may obtain the first processing policy of the first machine learning model, and send the first processing policy to the model inference function entity. Correspondingly, the model inference function entity may receive the first processing policy from the model management function entity. In other words, the first processing policy may also be dynamically configured by a network element/entity in a management domain, so that the first processing policy can be dynamically adjusted based on an actual requirement.

The model management function entity may preconfigure or predefine the first processing policy locally. The model management function entity may obtain the first processing policy locally at any possible occasion, such as when a current occasion is a delivery occasion of the first processing policy, or when the model management function entity learns that the model inference function entity currently needs to obtain the first processing policy, for example, when the first processing policy is not preconfigured for the model inference function entity. Then, the model management function entity may send the first processing policy to the model inference function entity, for example, send signaling/a message, which may be specifically existing signaling/an existing message or newly defined signaling/a newly defined message, carrying the first processing policy. This is not limited herein. Correspondingly, the model inference function entity may obtain the first processing policy by receiving and parsing the signaling/message.

Certainly, the model inference function entity may alternatively preconfigure or predefine the first processing policy locally, to avoid overheads caused by configuration. The model inference function entity may obtain the first processing policy locally at any possible occasion, such as when the first communication data set has been obtained currently, and therefore, the first processing policy needs to be obtained locally to process the first communication data set. Alternatively, the model inference function entity may periodically obtain the first processing policy locally.

With reference to the foregoing method, in a second possible design solution, the method may further include: The model management function entity may obtain the second processing policy of the first machine learning model, and send the second processing policy to the model training function entity. Correspondingly, the model training function entity may receive the second processing policy from the model management function entity.

The model management function entity may preconfigure or predefine the second processing policy locally. The model management function entity may obtain the second processing policy locally at any possible occasion, such as when a current occasion is a delivery occasion of the second processing policy, or when the model management function entity learns that the model training function entity currently needs to obtain the second processing policy, for example, when the second processing policy is not preconfigured for the model training function entity. Then, the model management function entity may send the second processing policy to the model training function entity, for example, send signaling/a message, which may be specifically existing signaling/an existing message or newly defined signaling/a newly defined message, carrying the second processing policy. This is not limited herein. Correspondingly, the model training function entity may obtain the second processing policy by receiving and parsing the signaling/message.

Certainly, the model training function entity may alternatively preconfigure or predefine the second processing policy locally. The model training function entity may obtain the second processing policy locally at any possible occasion, such as when the second communication data set has been obtained currently, and therefore, the second processing policy needs to be obtained locally to process the second communication data set. Alternatively, the model inference function entity may periodically obtain the second processing policy locally.

With reference to the foregoing method, in a third possible design solution, after S603 or S604, the method may further include: The model training function entity sends second indication information to the model inference function entity; and correspondingly, the model inference function entity receives the second indication information from the model training function entity, and obtains the second machine learning model based on the second indication information. The second indication information may indicate the second machine learning model, for example, carry an identifier and address information of the second machine learning model. The second machine learning model is obtained by updating the first machine learning model. In this way, the machine learning model is updated, and an impact on an actual service caused by reduced precision of the model is avoided.

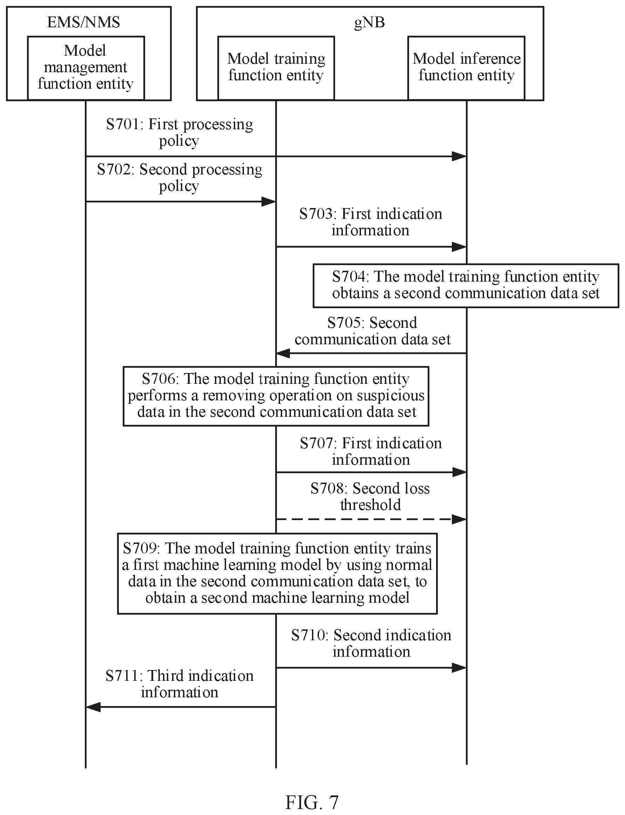

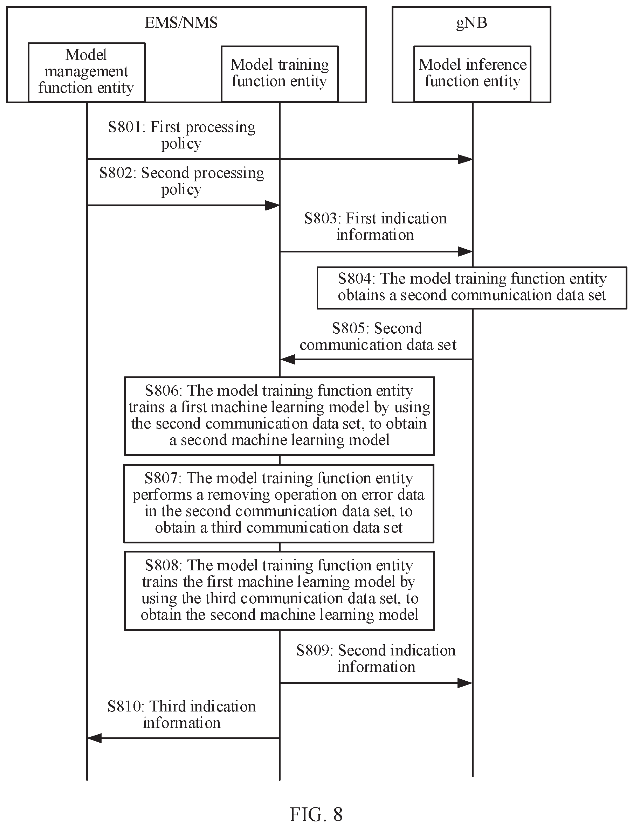

With reference to FIG. 6, the foregoing describes an overall procedure of the model management method provided in embodiments of this application. With reference to FIG. 7 and FIG. 8, the following describes in detail specific procedures of the model management method provided in embodiments of this application in various scenarios.

### Scenario 1:

FIG. 7 is a schematic flowchart 2 of a model management method according to an embodiment of this application. For example, the model management method is mainly applicable to communication between a model inference function entity, a model training function entity, and a model management function entity. The model management function entity may be deployed in an EMS/NMS, and the model training function entity and the model inference function entity may be deployed in an access network device, for example, a gNB.

Specifically, as shown in FIG. 7, a procedure of the model management method is as follows.

S701: The model management function entity sends a first processing policy to the model inference function entity.

The first processing policy may include at least one of the following: an identifier of a machine learning model or a first loss threshold. The identifier of the machine learning model is a unique identifier of the model, and is used for distinguishing between different machine learning models. In addition, after the machine learning model is updated, the identifier of the machine learning model before updating may be reused. In other words, the first machine learning model and the second machine learning model may share an identifier of a same machine learning model. In addition, for specific implementation of the first loss threshold, refer to related descriptions of the method shown in FIG. 6. Details are not described herein again.

S702: The model management function entity sends a second processing policy to the model training function entity.

The second processing policy may include at least one of the following: an identifier of a machine learning model, a first condition, a second condition, or a second proportion threshold. For specific implementation, refer to related descriptions of the method shown in FIG. 6. Details are not described herein again.

Optionally, the second processing policy may further be at least one of the following: an update periodicity, an update threshold, an accuracy threshold, or maximum waiting duration. The update periodicity may indicate an interval at which the machine learning model needs to be retrained and updated once, to avoid an impact of model drift on prediction accuracy, and ensure that the model always has high prediction accuracy. The update threshold is a threshold for updating performance by the machine learning model. An update action of the model is performed only when performance of a retrained model satisfies the update threshold. In an implementation, the update threshold may indicate a minimum value of the performance of the machine learning model obtained through retraining, that is, the update action is performed only when the performance of the retrained model exceeds the update threshold. In another implementation, the update threshold may indicate a minimum value of a model performance gain, that is, the update action is performed only when a difference between the performance of the retrained model and performance of a model before training exceeds the update threshold. The accuracy threshold may indicate a lowest level of prediction accuracy that needs to be achieved by a retrained model. A model whose accuracy is lower than the accuracy threshold is considered not to have completed training and needs to be continuously trained. The maximum waiting duration is maximum duration required for updating a model once. If the update is not completed within the maximum waiting duration, the update needs to be suspended.

S703: The model training function entity sends first indication information to the model inference function entity.

The model training function entity may send the first indication information to the model inference function entity based on a condition A or a condition B in the first condition. For specific implementation, refer to the foregoing related descriptions. Details are not described herein again.

S704: The model inference function entity obtains a second communication data set.

The model inference function entity may obtain a first communication data set from a plurality of terminals based on the first indication information, and perform, according to the first processing policy, a marking operation on suspicious data whose loss value is greater than the first loss threshold in the first communication data set, to obtain the second communication data set.

In addition, for specific implementation of S704, still refer to related descriptions in S602. Details are not described herein again.

S705: The model inference function entity sends the second communication data set to the model training function entity.

S706: The model training function entity performs a removing operation on suspicious data in the second communication data set.

The model training function entity may determine, according to the second processing policy, for example, the second condition, that a proportion of the suspicious data in the second communication data set is less than the second proportion threshold, to perform the removing operation on the suspicious data in the second communication data set.

S707: The model training function entity sends the first indication information to the model inference function entity.

The model training function entity may send the first indication information to the model inference function entity based on a condition C in the first condition. For specific implementation, refer to the foregoing related descriptions. Details are not described herein again.

S708: The model training function entity sends a second loss threshold to the model inference function entity.

The second loss threshold may be delivered together with the first indication information in S707, or may be delivered separately.

It may be understood that S708 is an optional step. Alternatively, the model training function entity may not send the second loss threshold, and the model inference function entity continues to determine the suspicious data by using the preconfigured first loss threshold.

In addition, when S707 is performed, a procedure of the method is returned, and S704 is performed again.

S709: The model training function entity trains the first machine learning model by using normal data in the second communication data set, to obtain the second machine learning model.

S710: The model training function entity sends second indication information to the model inference function entity.

The second indication information may indicate the second machine learning model. For specific implementation, refer to related descriptions of the foregoing method. Details are not described herein again.

S711: The model training function entity sends third indication information to the model management function entity.

The third indication information may be used to report that the model update succeeds, and may specifically include at least one of the following: an identifier of the second machine learning model, a model version, and update time. The model version may indicate an updated model, for example, a version of the second machine learning model, and the update time may indicate time at which model update occurs or is completed.

### Scenario 2:

FIG. 8 is a schematic flowchart 3 of a model management method according to an embodiment of this application. For example, the model management method is mainly applicable to communication between a model inference function entity, a model training function entity, and a model management function entity. Both the model management function entity and the model training function entity may be deployed in an EMS/NMS, but deployment of the model management functional entity and the model training function entity may be decoupled. For example, the model training function entity may be independently deployed in an AI training functional module in the EMS/NMS. The model inference function entity may be deployed in an access network device, for example, a gNB.

Specifically, as shown in FIG. 8, a procedure of the model management method is as follows.

S801: The model management function entity sends a first processing policy to the model inference function entity.

The first processing policy may include at least one of the following: an identifier of a machine learning model, a first loss threshold, or a first proportion threshold. For specific implementation, refer to related descriptions of the method shown in FIG. 6. Details are not described herein again.

S802: The model management function entity sends a second processing policy to the model training function entity.

The second processing policy may include at least one of the following: an identifier of a machine learning model, a first condition, a second condition, a third loss threshold, or a second proportion threshold. For specific implementation, refer to related descriptions of the method shown in FIG. 6. Details are not described herein again.

Optionally, the second processing policy may further be at least one of the following: an update periodicity, an update threshold, an accuracy threshold, or maximum waiting duration. For specific implementation, refer to related descriptions in S702. Details are not described herein again.

S803: The model training function entity sends first indication information to the model inference function entity.

The model training function entity may send the first indication information to the model inference function entity based on a condition A or a condition B in the first condition. For specific implementation, refer to the foregoing related descriptions. Details are not described herein again.

S804: The model training function entity obtains a second communication data set.

The model training function entity may obtain a first communication data set from a plurality of terminals based on the first indication information. In this case, the model training function entity may determine a proportion of suspicious data in the first communication data set according to the first processing policy. If the proportion of the suspicious data is less than or equal to the first proportion threshold, the model training function entity may remove the suspicious data from the first communication data set, to obtain the second communication data set; or if the proportion of the suspicious data is greater than the first proportion threshold, the model training function entity may mark the suspicious data in the first communication data set, to obtain the second communication data set.

In addition, for specific implementation of S704, still refer to related descriptions in S602. Details are not described herein again.

S805: The model training function entity sends the second communication data set to the model training function entity.

It may be understood that, if the second communication data set is a communication data set from which suspicious data has been removed, the model training function entity performs S806; otherwise, if the second communication data set is a communication data set in which suspicious data has been marked, the model training function entity performs S807 and S808.

S806: The model training function entity trains a first machine learning model by using the second communication data set, to obtain a second machine learning model.

For specific implementation of S806, refer to related descriptions in S603. Details are not described herein again.

S807: The model training function entity performs a removing operation on error data in the second communication data set, to obtain a third communication data set.

S808: The model training function entity trains the first machine learning model by using the third communication data set, to obtain the second machine learning model.

For specific implementation of S807 and S808, refer to related descriptions in S604. Details are not described herein again.

S809: The model training function entity sends second indication information to the model inference function entity.

The second indication information may indicate the second machine learning model. For specific implementation, refer to related descriptions of the foregoing method. Details are not described herein again.

S810: The model training function entity sends third indication information to the model management function entity.

For specific implementation of S810, refer to related descriptions in S711. Details are not described herein again.

It may be understood that, in the foregoing Scenario 2, the model training function entity and the model management function entity may alternatively be deployed in a non-RT RIC or a near-RT RIC, and the model inference function entity may alternatively be deployed in an O-RAN-based O-CU or an O-RAN-based O-DU.

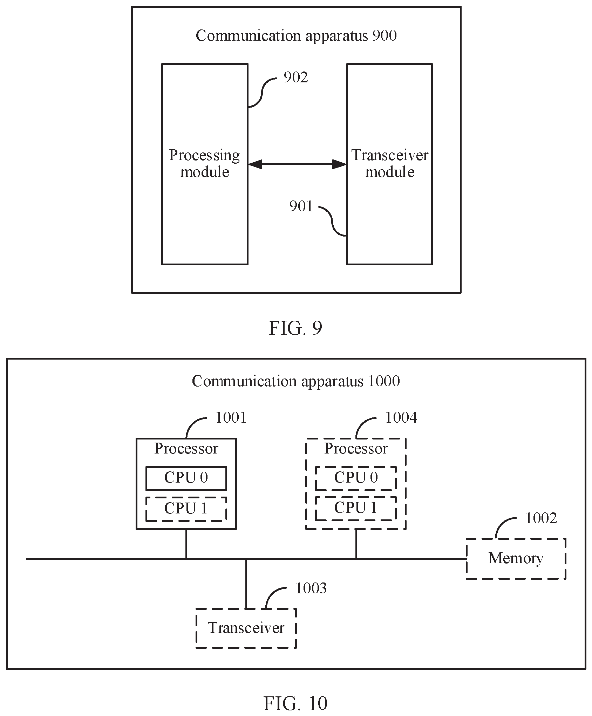

The model management method provided in embodiments of this application is described in detail above with reference to FIG. 6 to FIG. 8. The following describes in detail, with reference to FIG. 9 and FIG. 10, a communication apparatus configured to perform the model management method provided in embodiments of this application.

FIG. 9 is a diagram 1 of a structure of a communication apparatus according to an embodiment of this application. For example, as shown in FIG. 9, the communication apparatus 900 includes a transceiver module 901 and a processing module 902. For ease of description, FIG. 9 shows only main parts of the communication apparatus.

The transceiver module 901 is configured to perform receiving and sending functions in the method shown in FIG. 6 to FIG. 8, and the processing module 902 is configured to perform a function other than the receiving and sending functions in the method shown in FIG. 6 to FIG. 8.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 902 executes the program or the instructions, the communication apparatus 900 can perform the functions in the method shown in FIG. 6 to FIG. 8.

It may be understood that the communication apparatus 900 may be a terminal or a network device, or may be a chip (system) or another part or component that may be disposed in the terminal or the network device, or may be an apparatus that includes the terminal or the network device. This is not limited in this application.

In addition, for a technical effect of the communication apparatus 900, refer to the technical effects of the model management method shown in FIG. 6 to FIG. 8. Details are not described herein again.

FIG. 10 is a diagram 2 of a structure of a communication apparatus according to an embodiment of this application. For example, the communication apparatus may be a terminal, or may be a chip (system) or another part or component that may be disposed in the terminal. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following describes parts of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing unit, CPU), or may be an application specific integrated circuit (application specific integrated circuit, ASIC), or is configured as one or more integrated circuits that implement embodiments of this application, for example, one or more microprocessors (digital signal processor, DSP), or one or more field programmable gate arrays (field programmable gate array, FPGA).

Optionally, the processor 1001 may perform various functions of the communication apparatus 1000 by running or executing a software program stored in the memory 1002 and invoking data stored in the memory 1002, for example, perform the model management method shown in FIG. 6 to FIG. 8.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store a software program for executing solutions of this application, and the processor 1001 controls execution of the software program. For specific implementation, refer to the foregoing method embodiment. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, a Blu-ray disc, and the like), magnetic disk storage media, or another magnetic storage device, or any another medium that can be used to carry or store desired program code in the form of instructions or a data structure and that can be accessed by a computer, but not limited thereto. The memory 1002 may be integrated with the processor 1001, or may exist independently and is coupled to the processor 1001 through an interface circuit (not shown in FIG. 10) of the communication apparatus 1000. This is not specifically limited in embodiments of this application.

The transceiver 1003 is configured to communicate with another communication apparatus. For example, the communication apparatus 1000 is a terminal, and the transceiver 1003 may be configured to communicate with a network device or communicate with another terminal device. For another example, the communication apparatus 1000 is a network device, and the transceiver 1003 may be configured to communicate with a terminal or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through an interface circuit (not shown in FIG. 10) of the communication apparatus 1000. This is not specifically limited in embodiments of this application.

It may be understood that the structure of the communication apparatus 1000 shown in FIG. 10 does not constitute a limitation on the communication apparatus. An actual communication apparatus may include more or fewer parts than those shown in the figure, or some parts may be combined, or different part arrangement may be used.

In addition, for a technical effect of the communication apparatus 1000, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessed by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such understanding, the technical solutions of this application essentially, or the part contributing to a conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model management method, applied to a model inference function entity, and comprising:
obtaining a first communication data set used for updating a first machine learning model, wherein the first machine learning model is used for managing a wireless communication service; and
sending a second communication data set to a model training function entity, wherein the second communication data set is obtained by performing a processing operation on suspicious data in the first communication data set according to a first processing policy, the first processing policy comprises a first loss threshold, and the suspicious data is wireless communication data whose loss value is greater than the first loss threshold.

2. The method according to claim 1, wherein the processing operation comprises a marking operation, and the marking operation is adding an easily identifiable marker to the suspicious data.

3. The method according to claim 2, wherein before performing the marking operation, the method further comprises: determining that a proportion of the suspicious data in the first communication data set is greater than a first proportion threshold.

4. The method according to claim 1, wherein the processing operation comprises a removing operation, and the removing operation is removing the suspicious data from the first communication data set.

5. The method according to claim 4, wherein before performing the removing operation, the method further comprises: determining that a proportion of the suspicious data in the first communication data set is less than or equal to a first proportion threshold.

6. The method according to claim 3 or 4, wherein the first processing policy comprises the first proportion threshold.

7. The method according to any one of claims 1 to 6, wherein the first processing policy indicates the processing operation.

8. The method according to any one of claims 1 to 7, wherein the method further comprises:
receiving the first processing policy from a model management function entity.

9. The method according to claim 8, wherein the model inference function entity is deployed in an access network device.

10. The method according to claim 8 or 9, wherein the model inference function entity is deployed in an open central unit O-CU or an open distributed unit O-DU of the access network device.

11. The method according to any one of claims 1 to 10, wherein after the sending the second communication data set to the model training function entity, the method further comprises:
receiving second indication information from the model training function entity, wherein the second indication information indicates a second machine learning model, and the second machine learning model is obtained by updating the first machine learning model; and
obtaining the second machine learning model based on the second indication information.

12. A model management method, applied to a model training function entity, and comprising:
obtaining a second communication data set used for updating a first machine learning model, wherein the first machine learning model is used for managing a wireless communication service; and
updating the first machine learning model based on a third communication data set, wherein the third communication data set is obtained by performing a removing operation on error data in the second communication data set according to a second processing policy, the second processing policy comprises a third loss threshold, and if the first machine learning model is updated by using the error data, a loss value for processing wireless communication data by using the updated machine learning model is greater than the third loss threshold.

13. The method according to claim 12, wherein the removing operation is removing the error data from the second communication data set.

14. The method according to claim 13, wherein the removing operation is specifically removing the error data in marked suspicious data from the second communication data set, and the marked suspicious data is wireless communication data whose loss value is greater than a loss threshold in the second communication data set.

15. The method according to any one of claims 12 to 14, wherein the second processing policy indicates the removing operation.

16. The method according to any one of claims 12 to 15, wherein the method further comprises:
receiving the second processing policy from a model management function entity.

17. The method according to any one of claims 12 to 16, wherein before the obtaining the second communication data set used for updating the first machine learning model, the method further comprises:
sending first indication information to a model inference function entity, wherein the first indication information indicates that the first machine learning model needs to be updated; and
the obtaining the second communication data set used for updating the first machine learning model comprises:
receiving the second communication data set from the model inference function entity.

18. The method according to claim 17, wherein the sending the first indication information to the model inference function entity comprises:
sending the first indication information to the model inference function entity based on a first condition, wherein the first condition comprises at least one of the following: a next update periodicity of a machine learning model is currently entered, prediction accuracy of the machine learning model is lower than an accuracy threshold, or a proportion of suspicious data in wireless communication data that is obtained last time and that is used for updating the machine learning model is greater than a second proportion threshold, and current remaining duration until ending of machine learning model update is greater than threshold duration, wherein the threshold duration is a sum of duration needed for obtaining the wireless communication data used for updating the machine learning model and duration needed for updating the machine learning model.

19. The method according to claim 18, wherein the method further comprises:
sending a second loss threshold to the model inference function entity.

20. The method according to claim 18 or 19, wherein the second processing policy further indicates the first condition.

21. The method according to any one of claims 18 to 20, wherein before updating the first machine learning model based on the third communication data set, the method further comprises:
determining, based on a second condition, to update the first machine learning model, wherein the second condition is that a proportion of suspicious data in a communication data set is less than or equal to the second proportion threshold.

22. The method according to claim 21, wherein the second processing policy further indicates the second condition.

23. The method according to any one of claims 18 to 22, wherein the second processing policy comprises the second proportion threshold.

24. The method according to any one of claims 12 to 23, wherein after the updating the first machine learning model based on the third communication data set, the method further comprises:
sending second indication information to the model inference function entity, wherein the second indication information indicates a second machine learning model, and the second machine learning model is obtained by updating the first machine learning model.

25. The method according to any one of claims 12 to 24, wherein the model training function entity is deployed in an access network device, and the second communication data set comprises wireless communication data between the access network device and a plurality of terminals.

26. A model management method, applied to a model management function entity, and comprising:
obtaining a first processing policy of a first machine learning model, wherein the first machine learning model is used for managing a wireless communication service, the first machine learning model is deployed in a model inference function entity, the first processing policy comprises a first loss threshold, the first processing policy is capable of being used to perform a processing operation on suspicious data in a communication data set used for updating a machine learning model, and the suspicious data is data whose loss value is greater than the first loss threshold; and
sending the first processing policy to the model inference function entity.

27. The method according to claim 26, wherein the method further comprises:
obtaining a second processing policy of the first machine learning model, wherein the second processing policy is capable of being used to perform a removing operation on error data in the communication data set used for updating the machine learning model, the second processing policy comprises a third loss threshold, and if the machine learning model is updated by using the error data, a loss value for processing wireless communication data by using the updated machine learning model is greater than the third loss threshold; and
sending the second processing policy to a model training function entity configured to update the first machine learning model.

28. A communication apparatus, wherein the apparatus comprises a module configured to perform the method according to any one of claims 1 to 27.

29. A communication apparatus, wherein the communication apparatus comprises a processor and a memory, the memory is configured to store computer instructions, and when the processor executes the instructions, the communication apparatus is caused to perform the method according to any one of claims 1 to 27.

30. A computer-readable storage medium, wherein the computer-readable storage medium comprises a computer program or instructions, and when the computer program or the instructions are run on a computer, the computer is caused to perform the method according to any one of claims 1 to 27.
